# EUROPÄISCHE PATENTANMELDUNG

(11) **EP 4 468 745 A1**
(43) Veröffentlichungstag der Anmeldung: **27.11.2024**
(21) Anmeldenummer: 24176942.1
(22) Anmeldetag: 21.05.2024
(51) Int. Cl.: H04R 25/00, H04W 8/00, H04W 4/80, H04W 4/02, H04W 12/33, G06F 21/35, H04W 12/63

(54) **VERFAHREN ZUM BETRIEB EINES SMARTEN MOBILGERÄTS, HÖRVORRICHTUNG UND HÖRSYSTEM**

(30) Priorität: 26.05.2023 DE 102023204981
(71) Anmelder: Sivantos Pte. Ltd., Singapore 539775 (SG)
(72) Erfinder: BLENDINGER, Michael, 91058 Erlangen (DE); PFROMMER, Andreas, 91058 Erlangen (DE); MITRA, Subhasri, 91058 Erlangen (DE)
(74) Vertreter: FDST Patentanwälte

(57) **Zusammenfassung**

Es wird ein Verfahren zum Betrieb eines smarten Mobilgeräts (4) beschrieben, bei dem in einem Sperrzustand des Mobilgeräts (4), in dem ein manueller Zugriff auf dessen Dateninhalt gesperrt ist, eine Anwesenheit eines dem Mobilgerät (4) bekannten Geräts (2) mittels eines Funkmoduls (10, 12, 20, 22) abgefragt oder ermittelt wird. Bei erkannter Anwesenheit des bekannten Geräts (2) mittels einer Ultrabreitbandfunkverbindung wird ermittelt, ob sich das bekannte Gerät (2) innerhalb eines vorgegebenen Abstands zu dem Mobilgerät (4) befindet, und der Sperrzustand des Mobilgeräts (4) aufgehoben, wenn sich das bekannte Gerät (2) innerhalb des vorgegebenen Abstands befindet.

## Beschreibung

Die Erfindung betrifft ein Verfahren zum Betrieb eines smarten Mobilgeräts. Des Weiteren betrifft die Erfindung eine Hörvorrichtung sowie ein Hörsystem.

Hörvorrichtungen dienen üblicherweise zur Ausgabe eines Tonsignals an das Gehör des Trägers dieser Hörvorrichtung. Die Ausgabe erfolgt dabei mittels eines Ausgabewandlers, meist auf akustischem Weg über Luftschall mittels eines Lautsprechers (auch als "Hörer" oder "Receiver" bezeichnet). Häufig kommen derartige Hörvorrichtungen dabei als sogenannte Hörhilfegeräte (auch kurz: Hörgeräte) zum Einsatz. Dazu umfassen die Hörvorrichtungen normalerweise einen akustischen Eingangswandler (insbesondere ein Mikrophon) und einen Signalprozessor, der dazu eingerichtet ist, das von dem Eingangswandler aus dem Umgebungsschall erzeugte Eingangssignal (auch: Mikrophonsignal) unter Anwendung mindestens eines üblicherweise nutzerspezifisch hinterlegten Signalverarbeitungsalgorithmus derart zu verarbeiten, dass eine Hörminderung des Trägers der Hörvorrichtung zumindest teilweise kompensiert wird. Insbesondere im Fall eines Hörhilfegeräts kann es sich bei dem Ausgabewandler neben einem Lautsprecher auch alternativ um einen sogenannten Knochenleitungshörer oder ein Cochlea-Implantat handeln, die zur mechanischen oder elektrischen Einkopplung des Tonsignals in das Gehör des Trägers eingerichtet sind. Unter dem Begriff Hörvorrichtungen fallen zusätzlich insbesondere auch Geräte wie z.B. sogenannte Tinnitus-Masker, Headsets, Kopfhörer und dergleichen.

Typische Bauformen von Hörvorrichtungen, insbesondere Hörgeräten, sind Hinter-dem-Ohr- ("BTE"-) und In-dem-Ohr- ("IdO"- oder "ITE"-) Hörvorrichtungen. Diese Bezeichnungen zielen auf die bestimmungsgemäße Trageposition ab. So weisen Hinter-dem-Ohr-Hörvorrichtungen ein (Haupt-) Gehäuse auf, das hinter der Ohrmuschel getragen wird. Hier kann in Modelle unterschieden werden, deren Lautsprecher in diesem Gehäuse angeordnet ist - die Schallausgabe an das Ohr erfolgt dabei üblicherweise mittels eines Schallschlauchs, der im Gehörgang getragen wird - sowie in Modelle, die einen externen Lautsprecher, der im Gehörgang platziert wird, aufweisen. In-dem-Ohr-Hörvorrichtungen weisen hingegen ein Gehäuse auf, das in der Ohrmuschel oder sogar vollständig im Gehörgang getragen wird.

Smarte Mobilgeräte sind beispielsweise Smartphones, Tablets, aber auch sogenannte "wearables" wie z. B. Smartwatches (d. h. Armbanduhren mit Zusatzfunktionen, insbesondere Kommunikationsfähigkeit, Internetanbindung und dergleichen). Smartphones und Tablets können zusammen mit Hörvorrichtungen auch ein Hörsystem bilden, bspw. um Einstellungen an der Hörvorrichtung vornehmen zu können. Da derartige Mobilgeräte häufig auch sensiblen (insbesondere persönlichen) Dateninhalt enthalten können, weisen diese häufig einen Sperrzustand auf, um unbefugten Zugriff durch Dritte zu unterbinden. Bei einem Smartphone oder auch einem Tablet wird dieser Sperrzustand meist durch einen Zahlencode, ein Muster (die üblicherweise auf einem Bildschirm eingegeben werden), einen Fingerabdruck und teilweise auch durch eine Gesichtserkennung aufgehoben. Nachteilig daran ist jedoch, dass die Eingabe eines Codes mit Aufwand verbunden ist, ein Fingerabdruck theoretisch vom Mobilgerät selbst durch Dritte abgenommen werden könnte und die Gesichtserkennung, insbesondere bei Verwendung von Gesichtsmasken (medizinischer Atemschutz oder dergleichen) erschwert ist.

Der Erfindung liegt die Aufgabe zugrunde, die Nutzung eines smarten Mobilgeräts zu verbessern.

Diese Aufgabe wird erfindungsgemäß gelöst durch ein Verfahren mit den Merkmalen des Anspruchs 1. Des Weiteren wird diese Aufgabe erfindungsgemäß gelöst durch eine Hörvorrichtung mit den Merkmalen des Anspruchs 9. Außerdem wird diese Aufgabe erfindungsgemäß gelöst durch ein Hörsystem mit den Merkmalen des Anspruchs 10. Weitere vorteilhafte und teils für sich erfinderische Ausführungen und Weiterbildungen sind in den Unteransprüchen sowie der nachfolgenden Beschreibung dargelegt.

Das erfindungsgemäße Verfahren dient zum Betrieb eines smarten Mobilgeräts, insbesondere eines Hörsystems, das ein solches Mobilgerät und vorzugsweise auch eine Hörvorrichtung umfasst. Verfahrensgemäß wird dabei in einem Sperrzustand des Mobilgeräts, in dem ein manueller Zugriff auf dessen Dateninhalt gesperrt ist, eine Anwesenheit eines dem Mobilgerät bekannten Geräts mittels eines Funkmoduls des Mobilgeräts und/oder des bekannten Geräts abgefragt oder ermittelt. Bei erkannter Anwesenheit des bekannten Geräts wird mittels einer Ultrabreitbandfunkverbindung ermittelt, ob sich das bekannte Gerät innerhalb eines vorgegebenen Abstands zu dem Mobilgerät befindet. Der Sperrzustand des Mobilgeräts wird dabei aufgehoben, wenn sich das bekannte Gerät innerhalb des vorgegebenen Abstands befindet.

Anders ausgedrückt wird das Mobilgerät dann entsperrt, wenn sich ein bekanntes Gerät - festgestellt mittels der, vorzugsweise bereits zwischen dem Mobilgerät und dem bekannten Gerät aufgebauten, Ultrabreitbandverbindung - innerhalb eines vorgegebenen Abstands (konkret eines Abstandsgrenzwerts) befindet. Dies ist vorteilhaft, da so eine Entsperrung mittels eines manuell einzugebenden Codes, einer Fingerabdruckerkennung oder einer Gesichtserkennung nicht erforderlich ist. Der vorgegebene Abstand (konkret der vorgegebene Abstandsgrenzwert) dient insbesondere also dazu, festzustellen, ob zwischen dem Mobilgerät und dem bekannten Gerät eine Entfernung vorliegt, die auf eine beabsichtigte Nutzung des Mobilgeräts hindeutet. Beispielsweise kann es sich bei dem bekannten Gerät um eine Art Token oder dergleichen handeln, der einer für die Entsperrung berechtigten Person zugeordnet ist und insbesondere auch von dieser mitgeführt wird.

Vorzugsweise wird als bekanntes Gerät eine Hörvorrichtung herangezogen, insbesondere ein Hörhilfegerät. Dies hat den Vorteil, dass die Person diese Art von Gerät üblicherweise eng am Körper trägt und insbesondere bei einem Hörhilfegerät dies normalerweise auch individuell zugeordnet ist. Dadurch ist die Wahrscheinlichkeit erhöht, dass, bei Anwesenheit des Geräts, die Person auch entsprechend berechtigt ist. Ein Missbrauch ist also vergleichsweise unwahrscheinlich.

In einer bevorzugten Verfahrensvariante wird als smartes Mobilgerät ein Smartphone herangezogen. Insbesondere in Kombination mit der Hörvorrichtung kann die Entsperrung insbesondere dann erfolgen, wenn die Person das Smartphone vor ihr Gesicht führt, um damit zu interagieren.

Insbesondere wird der Abstand (insbesondere der Abstandsgrenzwert), ab dem das Mobilgerät, insbesondere das Smartphone, freigeschaltet (entsperrt) wird, nutzerspezifisch vorgegeben. Anders ausgedrückt kann die Person den Abstandswert (Abstandsgrenzwert) selbst festlegen und damit vorgeben. Beispielsweise kann der Abstand zur Freigabe also auf 30 cm gewählt werden. In diesem Fall wird dann das Mobilgerät bzw. Smartphone erst dann freigeschaltet, wenn dieses sich innerhalb von 30 cm um den Kopf der Person und damit meist in einer Position befindet, in der die Person das Smartphone vor die eigenen Augen geführt hat. Insbesondere durch einen solchen, vergleichsweise geringen Abstandsgrenzwert, der optional zwischen etwa (d. h. +/- 5cm) 20 bis 60 cm, vorzugsweise zwischen 30 bis 50 cm, gewählt wird oder zweckmäßigerweise in diesem Bereich aus einer Liste ausgewählt werden kann, kann sichergestellt werden, dass eine Entsperrung durch eine andere Person, die sich in näherer Umgebung zu der Person mit dem Mobilgerät befindet, unterbunden ist. Ebenso soll eine unbeabsichtigte Entsperrung des Smartphones bspw. in einer Hosen-, Jacken- oder Handtasche der Person vermieden werden.

In einer bevorzugten Verfahrensvariante wird als Funkmodul ein Ultrabreitbandtransceiver herangezogen. Ein solcher Ultrabreitbandtransceiver arbeitet insbesondere auf einer Frequenzbandbreite von mindestens 500 MHz und/oder mindestens 20 % einer Mittenfrequenz. Dadurch kann der Ultrabreitbandtransceiver mit besonders kurzen Signalpulsen (vorzugsweise im Bereich von weniger als 10 ns, teilweise im Bereich um 1 ns) senden, was wiederum eine Leistungsaufnahme von wenigen µW ermöglicht. Dabei ist jedoch auch eine besonders hohe Auflösung bei einer Abstandsmessung, insbesondere mittels Signallaufzeitmessung, Ankunftswinkel-Ermittlung und dergleichen, möglich. Somit kann die Ermittlung des Abstands im Bereich von unter einem Meter, insbesondere unter 50 cm, auch besonders genau erfolgen. Als Mittenfrequenz ist dabei insbesondere der Mittelwert aus oberer und unterer Grenzfrequenz des entsprechenden Frequenzbandes zu verstehen. Im Gegensatz dazu kommen bei herkömmlichen für derartige Einsatzzwecke vorgesehenen Funktechniken (Schmalband-Funk oder Schmalband-Kommunikation) deutlich schmälere, insbesondere weniger als die Hälfte bemessende Frequenzbreiten zur Anwendung (WLAN bspw. mit maximal etwa 160 MHz im 5 GHz-Band, ansonsten weniger als 100 MHz; Bluetooth mit ebenfalls unter 100 MHz). Außerdem ist der Ultrabreitbandtransceiver vorzugsweise dazu eingerichtet, lediglich Einzel-Signalpulse zu senden. Hierbei kommt im Gegensatz zur herkömmlichen Funktechnik (insbesondere WLAN und Bluetooth) keine Modulation eines Trägersignals, konkret dessen Trägerfrequenz, zum Einsatz, sondern insbesondere sogenannte Pulsmodulationstechniken.

In einer weiteren bevorzugten Verfahrensvariante wird der Abstand des bekannten Geräts mittels sogenanntem two way ranging (TWR), d. h. insbesondere anhand einer bidirektionalen Kommunikation zwischen dem Mobilgerät und dem bekannten Gerät ermittelt. Dies ist insbesondere zur Abstandsermittlung zwischen zwei beweglichen Geräten zweckmäßig.

In einer zweckmäßigen Verfahrensvariante versendet das bekannte Gerät eine Aufforderung zum Aufheben des Sperrzustands des Mobilgeräts an das Mobilgerät, wenn sich das bekannte Gerät innerhalb des vorgegebenen Abstands (insbesondere Abstandsgrenzwerts) befindet. Dies hat wiederum den Vorteil, dass das Entsperren durch eine (insbesondere über die bloße Abstandsermittlung, bspw. das vorstehend genannte two way ranging hinausgehende) bidirektionale Kommunikation zwischen dem Mobilgerät und dem bekannten Gerät eingeleitet wird. Dies kann die Sicherheit des hier und im Folgenden beschriebenen Entsperrvorgangs erhöhen.

In einer weiteren zweckmäßigen Verfahrensvariante wird wobei als (optional weiteres) Funkmodul zur Ermittlung der Anwesenheit des bekannten Geräts ein Schmalbandtransceiver herangezogen und bei erkannter Anwesenheit, insbesondere innerhalb eines weiteren vorgegebenen Abstands (konkret eines weiteren vorgegebenen Abstandsgrenzwerts), die Ultrabreitbandverbindung aktiviert. Insbesondere werden in dieser Variante zwei Funkmodule, nämlich der Schmalbandtransceiver sowie auch der Ultrabreitbandtransceiver verwendet. Der Schmalbandtransceiver ist dabei insbesondere durchgehend aktiv und koppelt mit einem entsprechenden Schmalbandtransceiver des bekannten Geräts. Vorzugsweise ist der oder der jeweilige Schmalbandtransceiver dazu eingerichtet, basierend auf dem Bluetooth Low Energy Standard zu kommunizieren (d. h. zu "funken"). Dadurch lässt sich ein besonders geringer Energieverbrauch realisieren. Vorzugsweise ist bei dem Mobilgerät, insbesondere dem Smartphone, ein solcher Transceiver stets aktiv, so dass hierfür kein oder ein lediglich vernachlässigbarer Zusatzverbrauch hinzukommt.

In einer zusätzlichen, eine eigenständige Erfindung darstellenden Variante kann auch eine Zahlungsautorisation vorgenommen werden. Dies ist beispielweise möglich, indem mit dem Mobilgerät eine Zahlung vorbereitet wird, bspw. mittels einer near field communication Einrichtung, insbesondere indem eine Zahlungsapplikation auf dem das Mobilgerät bildenden Smartphone aktiviert und an eine entsprechende Gegenstelle geführt wird. Die Autorisation kann dann erfolgen, indem das bekannte Gerät, insbesondere die Hörvorrichtung (analog zur vorstehend beschriebenen Entsperrung) ausreichend nahe an das Smartphone herangeführt wird. Alternativ kann auf dem Mobilgerät (insbesondere Smartphone) der Person, die auch die vorstehend genannte Hörvorrichtung aufweist, eine Zahlungsapplikation installiert sein. Diese erhält von der Hörvorrichtung eine Information über Geräte mit einem Ultrabreitband-Funkmodul, die sich in der Nähe der Hörvorrichtung befinden. Die das Smartphone und die Hörvorrichtung nutzende Person kann dann das Gerät, insbesondere die diesem Gerät zugeordnete Person oder das Unternehmen, die bzw. das die Zahlung erhalten soll, auswählen. Die entsprechenden Bankdaten können dabei bereits in der Zahlungsapplikation hinterlegt sein oder seitens des Mobilgeräts bezogen werden.

In einer optionalen Ausführung kann es sich bei dem Mobilgerät auch um ein Ladegerät für die Hörvorrichtung handeln. Dieses Ladegerät befindet sich dabei vorzugsweise in einem gesperrten Zustand, in dem bspw. eine Ladefunktion steuerungstechnisch deaktiviert oder auch ein Schloss für einen Deckel arretiert ist. Erst wenn sich die Hörvorrichtung entsprechend nahe an das Ladegerät annähert, wird der gesperrte Zustand aufgehoben.

Die erfindungsgemäße Hörvorrichtung weist das vorstehend beschriebene und für die Ultrabreitbandverbindung eingerichtete Funkmodul auf. Außerdem weist die Hörvorrichtung einen Controller (auch als Signalprozessor bezeichnet) auf, der dazu eingerichtet ist, das vorstehend beschriebene Verfahren insbesondere selbsttätig, optional in Zusammenwirkung mit der die Hörvorrichtung nutzenden Person, durchzuführen. Insbesondere ist die Hörvorrichtung hierbei dazu eingerichtet, die vorstehend genannte Aufforderung zum Aufheben des Sperrzustands an das Mobilgerät zu versenden, insbesondere wenn der Signalprozessor ermittelt, dass das Mobilgerät und die Hörvorrichtung innerhalb des vorgegebenen Abstands zueinander angeordnet sind.

Das erfindungsgemäße Hörsystem weist die vorstehend beschriebene Hörvorrichtung mit dem für die Ultrabreitbandverbindung eingerichteten Funkmodul sowie das smarte Mobilgerät mit dem für die Ultrabreitbandverbindung eingerichteten (insbesondere zweiten) Funkmodul auf. Die Hörvorrichtung und/oder das Mobilgerät weisen dabei den vorstehend genannten Controller auf, der dazu eingerichtet ist, das vorstehend beschriebene Verfahren selbsttätig, optional in Zusammenwirkung mit der die Hörvorrichtung nutzenden Person, durchzuführen.

In bevorzugter Ausgestaltung ist der Controller (oder zumindest einer von ggf. mehreren Controllern) zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit der nutzenden Person - bei Ausführung der Betriebssoftware in dem Mikrocontroller automatisch durchgeführt wird. Der Controller kann im Rahmen der Erfindung alternativ aber auch durch ein nichtprogrammierbares elektronisches Bauteil, z.B. einen ASIC, gebildet sein, in dem die Funktionalität zur Durchführung des erfindungsgemäßen Verfahrens mit schaltungstechnischen Mitteln implementiert ist.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Der Vorteil der vorstehend beschriebenen, optionalen Nutzung der Schmalband- und der Breitbandfunkverbindung liegt darin, dass eine Schmalbandfunkverbindung meist ohnehin vorhanden ist und die Breitbandfunkverbindung dann nur aktiviert werden braucht, wenn diese erforderlich wird. Wird zur Schmalbandfunkverbindung insbesondere die Bluetooth Low Energy Funktechnik genutzt, kann hierbei auch eine besonders niedrige Leistungsaufnahme erzielt werden.

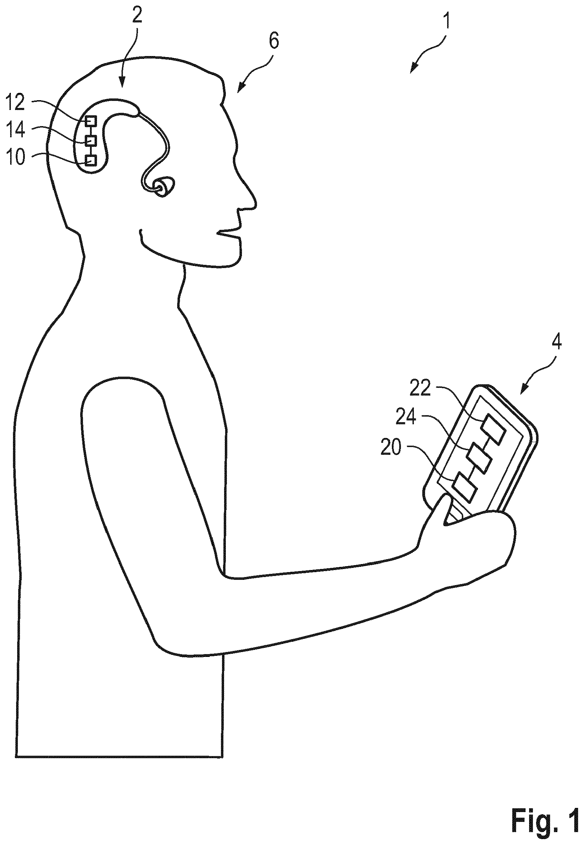

Nachfolgend wird ein Ausführungsbeispiel der Erfindung anhand einer Zeichnung näher erläutert. Darin zeigt die einzige Figur Fig. 1 in einer schematischen Darstellung ein Hörsystem.

In Fig. 1 ist schematisch ein Hörsystem 1 dargestellt. Dieses weist eine Hörvorrichtung in Form eines Hörhilfegeräts (kurz: Hörgerät 2) auf. Außerdem weist das Hörsystem 1 ein smartes Mobilgerät, hier in Form eines Smartphones 4 auf. Das Hörgerät 2 wird im bestimmungsgemäßen Einsatzzustand von einer Person 6 getragen.

Das Hörgerät 2 weist ein Schmalband-Funkmodul 10 und ein Ultrabreitband-Funkmodul 12 auf. Des Weiteren weist das Hörgerät 2 einen Controller 14 (auch; Signalprozessor) auf, der mit dem Schmalband-Funkmodul 10 und dem Ultrabreitband-Funkmodul 12 verbunden ist. Die beiden Funkmodule 10 bzw. 12 werden alternativ auch als "Transceiver" bezeichnet.

Das Smartphone 4 weist ebenfalls ein Schmalband-Funkmodul 20, ein Ultrabreitband-Funkmodul 22 sowie einen Controller 24 auf.

Der Controller 14 oder der Controller 24 ist dazu eingerichtet, ein im Folgenden näher beschriebenen Verfahren durchzuführen. Optional können auch beide Controller 14 bzw. 24 gleichermaßen dazu eingerichtet sein, das Verfahren durchzuführen.

Das im Folgenden beschriebene Verfahren dient zum Betrieb des Hörsystems 1, insbesondere des Smartphones 4. Konkret dient das Verfahren dazu, das Smartphone 4 zu entsperren, d. h. einen Sperrzustand des Smartphones 4, den letzteres üblicherweise auf einen Nutzerbefehl und/oder bei Ablauf einer vorgegebenen Zeit ohne Eingabe in das Smartphone 4 aufnimmt, aufzuheben. Dazu wird ermittelt, ob sich das dem Smartphone 4 bereits bekannte (bspw. vorher funktechnisch gekoppelte) Hörgerät 2 in der Nähe, bspw. weniger als 3 Meter, vorzugsweise weniger als 2 Meter entfernt von dem Smartphone 4 befindet. Dazu wird eine Kopplung zwischen dem Smartphone 4 und dem Hörgerät 2 über deren Schmalband-Funkmodule 10 bzw. 20 überprüft. Sind das Hörgerät 2 und das Smartphone 4 über deren Schmalband-Funkmodule 10 bzw. 20 gekoppelt, kann für die bestehende Schmalband-Funkverbindung eine Signalstärke ermittelt werden, die - eine freie Funkstrecke angenommen - eine Information über den Abstand zwischen dem Hörgerät 2 und dem Smartphone 4 enthält.

Dieser Abstand wird mit einem vorgegebenen Grenzwert, bspw. 2 Meter, verglichen und, wenn der Grenzwert unterschritten ist, wird eine Ultrabreitband-Funkverbindung mittels der jeweiligen Ultrabreitband-Funkmodule 12 bzw. 22 initiiert. Anhand der Ultrabreitband-Funkverbindung wird dann ein Abstand zwischen dem Smartphone 4 und dem Hörgerät 2 präziser bestimmt. Dazu wird ein sogenanntes two way ranging angewendet. Dazu wird vom Hörgerät 2 eine Anfrage an das Smartphone 4 gesendet, die eine Sendezeit enthält. Letzteres sendet eine Antwort, die die Empfangszeit der Anfrage und die Sendezeit der Antwort enthält. Das Hörgerät 2 registriert wiederum die Empfangszeit der Antwort und sendet einen "Bericht", der zumindest die Sendezeit der Anfrage, die Empfangszeit der Antwort und die Sendezeit des Berichts enthält. Der Controller 24 des Smartphones 4 kann daraus die Signallaufzeit und damit auch den aktuellen Abstandswert zwischen dem Hörgerät 2 und dem Smartphone 4 bestimmen.

In einer Variante vergleicht der Controller 24 des Smartphones 4 diesen aktuellen Abstandswert mit einem (weiteren) vorgegebenen Grenzwert, bspw. 30 oder 40 cm. Dies ist meist ein typischer Abstand, wenn die Person 6 das Smartphone 4 zum Gesicht führt, um etwas nachzusehen oder dergleichen. Liegt der aktuelle Abstandswert gleich oder unter diesem weiteren Grenzwert, hebt der Controller 24 den Sperrzustand des Smartphones 4 auf. Vorzugsweise ist das Hörgerät 2 hierzu im Smartphone 4 (konkret einem Speicher des Smartphones 4) als berechtigtes, bekanntes Gerät zum Aufheben des Sperrzustands hinterlegt.

In einer alternativen Verfahrensvariante ermittelt der Controller 14 des Hörgeräts 2 den aktuellen Abstandswert auf Basis des vorstehend beschriebenen two way ranging Vorgehens und sendet, bei Unterschreiten des entsprechenden Grenzwerts, eine Freigabe- oder Entsperraufforderung (bspw. mittels des Schmalband-Funkmoduls 12) an das Smartphone 4.

Das vorstehend beschriebene two way ranging kann auch seitens des Smartphones 4 initialisiert werden. Der Signallauf von Anfrage, Antwort etc. ist dann entsprechend umgekehrt.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Hörsystem
- 2: Hörgerät
- 4: Smartphone
- 6: Person
- 10: Schmalband-Funkmodul
- 12: Ultrabreitband-Funkmodul
- 14: Controller
- 20: Schmalband-Funkmodul
- 22: Ultrabreitband-Funkmodul
- 24: Controller

## Patentansprüche

1. Verfahren zum Betrieb eines smarten Mobilgeräts (4), wobei verfahrensgemäß
- in einem Sperrzustand des Mobilgeräts (4), in dem ein manueller Zugriff auf dessen Dateninhalt gesperrt ist, eine Anwesenheit eines dem Mobilgerät (4) bekannten Geräts (2) mittels eines Funkmoduls (10, 12, 20, 22) abgefragt oder ermittelt wird,
- bei erkannter Anwesenheit des bekannten Geräts (2) mittels einer Ultrabreitbandfunkverbindung ermittelt wird, ob sich das bekannte Gerät (2) innerhalb eines vorgegebenen Abstands zu dem Mobilgerät (4) befindet, und
- der Sperrzustand des Mobilgeräts (4) aufgehoben wird, wenn sich das bekannte Gerät (2) innerhalb des vorgegebenen Abstands befindet.

2. Verfahren nach Anspruch 1,
wobei als Funkmodul ein Ultrabreitbandtransceiver (12, 22) herangezogen wird.

3. Verfahren nach Anspruch 1 oder 2,
wobei der Abstand nutzerspezifisch vorgegeben wird.

4. Verfahren nach einem der Ansprüche 1 bis 3,
wobei als smartes Mobilgerät ein Smartphone (4) herangezogen wird.

5. Verfahren nach einem der Ansprüche 1 bis 4,
wobei als bekanntes Gerät (2) eine Hörvorrichtung, insbesondere ein Hörhilfegerät (2) herangezogen wird.

6. Verfahren nach einem der Ansprüche 1 bis 5,
wobei der Abstand des bekannten Geräts (2) anhand einer bidirektionalen Kommunikation zwischen dem Mobilgerät (4) und dem bekannten Gerät (2) ermittelt wird.

7. Verfahren nach einem der Ansprüche 1 bis 6,
wobei das bekannte Gerät (2) eine Aufforderung zum Aufheben des Sperrzustands des Mobilgeräts (4) an das Mobilgerät (4) versendet, wenn sich das bekannte Gerät (2) innerhalb des vorgegebenen Abstands befindet.

8. Verfahren nach einem der Ansprüche 1 bis 7,
wobei als Funkmodul zur Ermittlung der Anwesenheit des bekannten Geräts (2) ein Schmalbandtransceiver (10, 20) herangezogen wird und wobei bei erkannter Anwesenheit, insbesondere innerhalb eines weiteren vorgegebenen Abstands, die Ultrabreitbandverbindung aktiviert wird.

9. Hörvorrichtung (2), aufweisend ein für eine Ultrabreitbandfunkverbindung eingerichtetes Funkmodul (10) sowie einen Controller (14), der dazu eingerichtet ist, ein Verfahren nach einem der Ansprüche 5 bis 8 durchzuführen.

10. Hörsystem (1), aufweisend eine Hörvorrichtung (2) mit einem für eine Ultrabreitbandfunkverbindung eingerichteten Funkmodul (10) sowie ein smartes Mobilgerät (4) mit einem für eine Ultrabreitbandfunkverbindung eingerichteten zweiten Funkmodul (22), wobei die Hörvorrichtung (2) und/oder das Mobilgerät (4) einen Controller (14, 24) aufweist, der dazu eingerichtet ist, ein Verfahren nach einem der Ansprüche 1 bis 8 durchzuführen.
